# FASCICULE DE BREVET EUROPEEN

(11) **EP 2 960 044 B1**
(45) Date de publication et mention de la délivrance du brevet: **27.02.2019**
(21) Numéro de dépôt: 15178169.7
(22) Date de dépôt: 07.10.2014
(51) Int. Cl.: B29C 65/34, B29C 65/56, B29C 65/72, B29C 73/34, B29K 101/12, B29K 105/06

(54) **AGRAFE**
KLAMMER
STAPLE

(30) Priorité: 14.10.2013 FR 1359964; 14.10.2013 FR 1359973; 14.10.2013 FR 1359983
(43) Date de publication de la demande: 30.12.2015
(62) Demande divisionnaire de: 14187973.4
(73) Titulaire: MIX, 30600 Vestric-et-Candiac (FR)
(72) Inventeur: GAZZERA, Philippe, 30620 Uchaud (FR)
(74) Mandataire: Rhein, Alain

(56) Documents cités:
- WO-A2-2012/066522
- DE-U1-202012 103 931
- JP-A- 2011 152 741
- US-B1- 8 443 860

## Description

La présente invention entre dans le domaine de la réparation de pièces endommagées, en particulier de pièces plastiques thermoplastiques ou composite.

Un tel dispositif trouvera une application préférentielle, mais aucunement limitative, dans le domaine de la réparation d'éléments de carrosserie de véhicule, notamment dans le secteur automobile.

De manière connue, la réparation d'une pièce plastique thermoplastique ou composite endommagée nécessite d'y adjoindre des éléments métalliques, afin d'assurer la rigidité de la réparation entre les parties endommagées de la pièce.

Comme illustré aux figures A et B, de tels éléments métalliques peuvent être constitués par des agrafes 1. Ces agrafes 1 sont chauffées, de manière à faire fondre localement le matériau plastique thermoplastique ou composite de la pièce, qui, une fois refroidi, noie l'agrafe 1 et l'emprisonne. Cette dernière constitue alors une structure métallique rigide au niveau de la réparation effectuée. Des opérations ultérieures de polissage, de remplissage, de peinture et/ou de vernissage peuvent alors être réalisées pour améliorer la tenue et la résistance de la réparation, mais surtout redonner un caractère esthétique à la pièce ainsi réparée.

Actuellement, le chauffage d'une agrafe 1, pour effectuer l'opération par thermosoudage, est réalisé à partir d'un équipement dédié de type pistolet à soudure 9, en particulier plastique. Un exemple d'un tel pistolet 9 est représenté en perspective à titre indicatif sur la figure A. Il présente des moyens d'alimentation électrique, notamment autonomes sous formes d'une batterie rechargeable. Ces moyens alimentent électriquement deux pannes 10 espacées à l'extrémité desquelles est montée une agrafe 1- Dès lors, c'est la résistance électrique du matériau métallique constituant l'agrafe 1 qui va générer un échauffement en vue de faire fondre le plastique et permettre la soudure.

Ainsi, l'invention concerne particulièrement une telle agrafe 1 pour la réparation par thermosoudage de pièces plastiques thermoplastique ou composite endommagées.

Toute agrafe 1 existante se présente sous la forme d'un fil métallique dont la section n'excède généralement pas 8/10^{ème} de millimètre (mm). Un tel fil peut être constitué en acier. Ce fil comporte deux branches de connexion 2 pourvues chacune d'une extrémité libre 3 destinée à être raccordée de façon amovible aux pannes 10 du pistolet de soudure plastique 9. Ainsi maintenue, l'agrafe 1 est connectée électriquement au pistolet 9 et ce dernier sert à venir appliquer le reste de l'agrafe contre la pièce à réparer.

A ce titre, le reste de l'agrafe comporte une partie active 4 prévue pour être immergée au sein du matériau. Cette partie active 4 présente des pliures, destinées à améliorer la jonction entre l'agrafe 1 et le matériau après soudage.

Plusieurs formes d'agrafe 1 existent actuellement, en fonction de la réparation à effectuer. La figure B montre un exemple d'une agrafe 1 connue mise en place au sein d'une pièce. Comme visible sur cette figure, l'agrafe 1 comprend deux branches de connexion 2 qui s'étendent parallèlement l'une par rapport à l'autre et définissent un plan de connexion P1. L'extrémité libre 3 de chaque branche de connexion 2 est destinée à venir en raccordement avec les pannes 10 du pistolet de soudure 9. Les branches de connexion 2 sont reliées à la partie active 4 au niveau de points de jonction 5 situés à l'opposé des extrémités libres 3.

La partie active 4 s'étend dans un plan actif qui est sensiblement orthogonal au plan de connexion P1. La partie active 4 présente une forme serpentant, tel un zigzag, depuis l'un vers l'autre des points de jonction 5 avec chacune des branches de connexion 2. Cette forme spécifique permet de ménager des portions 6 coudées, en U, de part et d'autre du plan de connexion P1. Ces portions 6 sont destinées à venir s'incruster dans chacune des parties 7 de la pièce à réparer, lors du thermosoudage, assurant ainsi de nouveau leur jonction et empêchant leur écartement localement au niveau de chaque portion 6.

On notera qu'une fois l'agrafe 1 en place, les branches de connexion 2 sont sectionnées, notamment au niveau des points de jonction 5, ne laissant que la partie active 4 noyée dans le matériau de la pièce.

Ce type d'agrafe 1 est généralement destiné à réparer deux parties 7 d'une pièce lorsqu'elles sont situées dans un même plan. D'autres types d'agrafe 1, de formes différentes, permettent de joindre des parties 7 incurvées ou formant un angle l'une par rapport à l'autre.

Un inconvénient commun à toutes ces agrafes 1 a été constaté du fait de leur faible accrochage au sein du matériau de la pièce à réparer. En effet, la longueur du fil constituant une agrafe 1 est limitée. Dans un sens (selon la direction de jonction A-A' définie par les deux extrémités libres 3 des branches de connexion 2), la partie active 4 se retrouve bornée entre les branches de connexion 2. Dans un autre sens sensiblement orthogonal à la direction de jonction A-A' (selon la direction d'extension B-B'), l'envergure de la partie active 4, en particulier l'espacement entre les portions 6 en U, est aussi restreinte. Cette faible distance limite l'emprise de l'agrafe 1 au sein de chaque partie 7 de la pièce à réparer, et de ce fait implique que la pièce réparée va s'endommager rapidement au fil du temps, car la continuité du matériau réparé n'est pas assurée. Ce matériau se rompt facilement dès lors qu'une force est exercée, soit perpendiculaire au plan de réparation, soit par traction parallèlement au plan de réparation. Dans ce cas, soit l'état physique de la pièce est engagé, soit les produits de remplissage utilisés pour le camouflage de la ligne de réparation peuvent se décrocher et altérer significativement l'aspect esthétique.

En particulier, du fait de la standardisation des équipements, en particulier des pistolets de soudure 9 destinés à recevoir les agrafes 1, ces dernières présentent un espacement 11 de 13 mm entre chacune des deux extrémités libres 3 adaptées à être raccordées avec les pannes 10 du pistolet 9. Cette dimension standard limite aussi la taille de la partie active 4 qui, actuellement, n'excède pas cette dimension et ne s'étend pas au-delà des branches de connexion 2 selon la direction de jonction A-A', ni n'excède cette dimension au-delà de la direction d'extension B-B'. Comme visible sur la figure B, cette surface détermine une zone d'ancrage et de jonction 8 de dimensions maximales de 13 mm sur 13 mm et centrée sur une droite reliant les deux points de jonction 5, ce qui limite la qualité de la réparation ainsi effectuée.

De telles agrafes sont ainsi décrites, par exemple, dans WO 2012/066522 A2, US 8 443 860 B1, DE 20 2012 103931 U1 et JP 2011 152741 A.

La présente invention a pour but de pallier les inconvénients de l'état de la technique en proposant une agrafe permettant à un opérateur du pistolet de soudure de voir l'emplacement d'une ligne de réparation malgré la présence sur le pistolet d'une agrafe dont le positionnement des branches de connexion 2 se retrouve en vis-à-vis et au-dessus de la ligne de réparation, dans l'alignement du pistolet de soudure.

A ce titre, l'invention concerne une agrafe, sous forme d'un fil métallique, comportant deux branches de connexion pourvues chacune d'une extrémité libre adaptée à être raccordée avec des pannes d'un pistolet de soudure, l'agrafe comportant une partie active prévue pour être immergée au sein d'un matériau par thermosoudure et reliée à chaque branche de connexion par un point de jonction opposé à l'extrémité libre correspondante, l'agrafe étant caractérisée par le fait que la partie active s'étend uniquement d'un côté d'un plan de connexion défini par les branches de connexion.

Selon un premier mode de réalisation avantageux, la partie active d'une agrafe comprend deux extensions reliées entre elles au niveau d'un segment de jonction proximal, chaque extension comprenant deux brins reliés entre eux au niveau d'un segment de jonction distal.

Selon une variante du mode de réalisation avantageux, une extension est plus longue que l'autre.

Selon un second mode de réalisation avantageux, la partie active comprend au moins une section droite ondulée sur au moins une partie de sa longueur.

D'autres caractéristiques et avantages de l'invention ressortiront de la description détaillée qui va suivre des modes de réalisation non limitatifs de l'invention, en référence aux figures annexées, dans lesquelles :
- la figure 1 représente schématiquement une vue en perspective d'une agrafe, dite « agrafe plane », montrant une partie active plane couvrant une zone s'étendant au-delà de la zone d'accrochage des agrafes de l'art antérieur ;
- la figure 2 représente schématiquement une vue en perspective d'une agrafe conforme à l'invention, montrant une partie active plane s'étendant d'un seul côté d'un plan de connexion défini par les deux banches de connexion de l'agrafe ;
- la figure 3 représente schématiquement une vue en perspective d'une agrafe conforme à l'invention, dite « agrafe d'angle », montrant une partie active destinée à coopérer avec une pièce à réparer au niveau d'un angle rentrant ;
- la figure 4 représente schématiquement une vue en perspective d'une agrafe conforme à l'invention, dite « agrafe d'angle », montrant une partie active destinée à coopérer avec une pièce à réparer au niveau d'un angle saillant ;
- la figure 5 représente schématiquement une vue en perspective d'une agrafe, dite « agrafe longue », montrant une partie active qui s'étend au-delà des projections des extrémités libres des branches de connexion ; et
- la figure 6 représente schématiquement une vue en perspective de l'agrafe de la figure 5, dans laquelle la partie active a été déformée en arc de cercle, tout en conservant l'espacement entre les deux branches de connexion.

La présente invention concerne une agrafe 1, destinée à être noyée par thermosoudage au sein d'une pièce plastique thermoplastique ou composite en vue de sa réparation.

A cet effet, une telle agrafe 1 se présente sous la forme d'un fil métallique. L'échauffement du fil, dû à sa résistance électrique et sous l'action d'un courant qui le traverse, permet de faire fondre localement le matériau de la pièce mis en contact avec l'agrafe 1. Cette dernière est destinée à venir coopérer en fixation provisoire, le temps de son échauffement et de sa pose, avec un équipement adapté, notamment un pistolet de soudure 9.

Pour ce faire, le pistolet 9 comprend deux pannes 10 sur chacune desquelles vient se fixer, de façon amovible, notamment par emboîtement, les extrémités du fil constituant l'agrafe 1.

En particulier, l'agrafe 1 comporte deux branches de connexion 2 pourvues chacune d'une extrémité libre 3, les deux extrémités libres 3 étant adaptées à être raccordées avec les pannes 10 du pistolet de soudure 9.

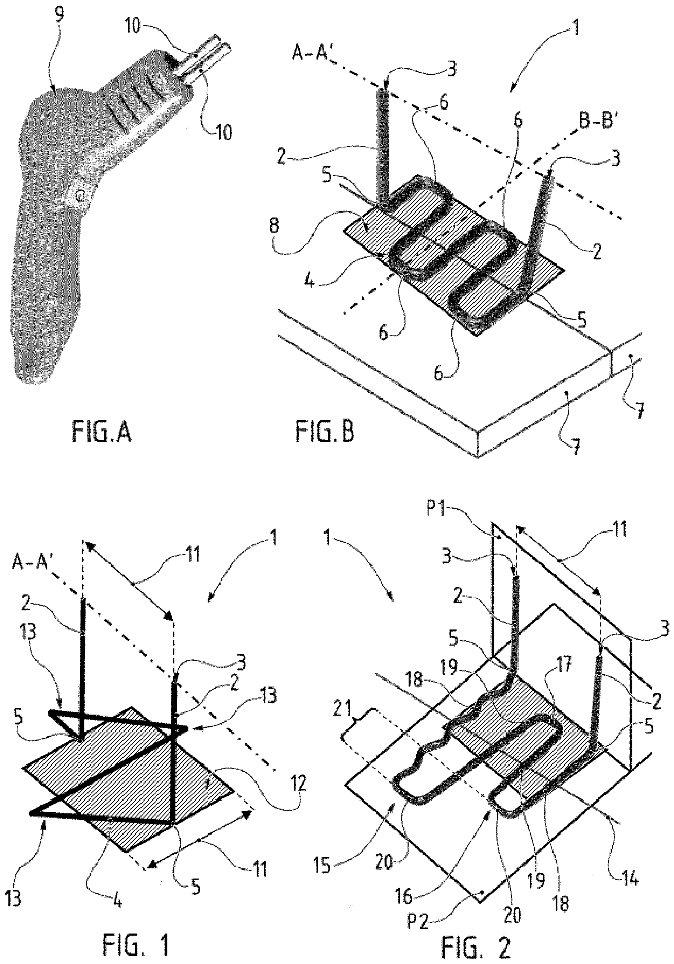

Comme représenté à la figure 1, les deux extrémités libres 3 définissent une direction de jonction A-A'. En d'autres termes, la droite passant par les deux extrémités libres 3 des branches de connexion 2 définit la direction de jonction A-A'.

Les deux branches de connexion 2 s'étendent parallèlement l'une à l'autre sur au moins une partie de leur longueur qui se trouve au niveau d'une portion destinée à venir coopérer, notamment en emboîtement, avec les pannes 10. Ainsi, avec la direction de jonction A-A', l'orientation des deux branches de connexion 2 définit un plan de connexion P1, visible à la figure 2, qui s'étend sensiblement dans l'alignement des pannes 10 du pistolet 9. C'est dans ce plan de connexion P1 que s'étend la partie de l'agrafe 1 qui ne sera pas immergé dans le matériau de la pièce à réparer.

A ce titre, les branches de connexion 2 comportent des points de jonction 5 entre lesquels s'étend une partie active 4 prévue pour être immergée au sein d'un matériau par thermosoudure. C'est donc uniquement cette partie active 4 qui est destinée à être noyée dans le matériau.

De préférence, la partie active 4 s'étend dans au moins un premier plan actif P2 qui est sécant par rapport au plan de connexion P1. Selon le schéma de principe de la figure 1, le plan de connexion P1 contenant les branches de connexion 2 est orthogonal par rapport au premier plan actif P2 contenant la partie active 4.

Il est possible d'augmenter la taille de la partie active 4, de sorte qu'elle s'étende au-delà de l'espacement 11 standard de treize millimètres (13 mm) entre les extrémités libres 3 des branches de connexion 2. En somme, au moins une longueur ou un segment 13 du fil constituant la partie active 4 s'étend en dehors d'une zone 12 délimitée, d'une part, selon la direction de jonction A-A', par l'espacement 11 entre les projections des extrémités libres 3 selon le plan de connexion P1, et, d'autre part, selon une direction d'extension B-B' orthogonale à la direction de jonction A-A', par ce même espacement 11. La figure 1 montre un exemple d'agrafe 1 où plusieurs longueurs 13 dépassent de la zone 12 ainsi délimitée.

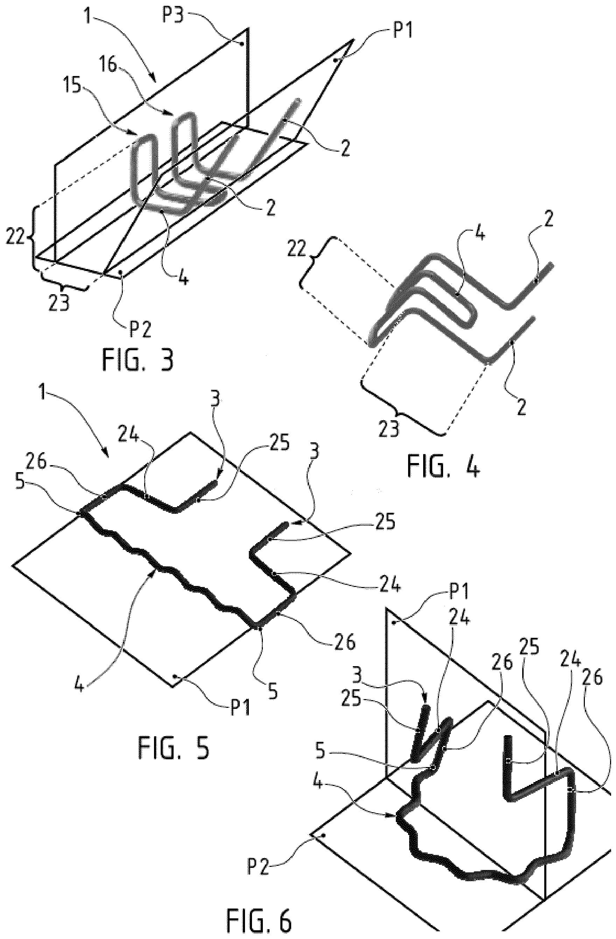

Il est également possible de prolonger la partie active 4, non plus uniquement entre, sous et de façon limitée de part et d'autre des branches de connexion 2, mais réciproquement entre et sous, mais aussi de sorte qu'elle s'étende plus loin de part et d'autre du plan de connexion P1, mais surtout au-delà de la zone actuellement délimitée 13. Notamment selon un mode spécifique illustré à la figure 5, la partie active 4 qui s'étend essentiellement selon la direction de jonction A-A' et extérieurement aux projections des extrémités libres 3 selon le plan de connexion P1, à l'inverse des parties actives 4 des agrafes 1 de l'art antérieur qui sont toutes situées uniquement entre les projections des extrémités libres 3.

L'agrafe 1 peut présenter une partie active 4 comportant une longueur supérieure à 13 mm selon au moins une direction parallèle ou perpendiculaire à la direction de jonction A-A'.

On entend par longueur supérieure à 13 mm, une longueur strictement supérieure à 13 mm, à savoir supérieure à l'espacement 11.

De plus, cette longueur d'une dimension définie s'entend lorsque la partie active 4 est étendue à plat. En d'autres termes, lorsque la partie active 4 s'étend selon un premier plan actif P2 et au moins un second plan actif P3, les portions de fil de la partie active 4 s'étendent sur les différents plans actifs P2, P3 par pliage du fil et la longueur comparée à 13 mm correspond à l'ensemble de ces portions de fil dépliées et rapportées dans un unique plan virtuel qui correspond au premier plan actif P2 prolongé par les autres plans actifs P3 alignés avec le premier plan actif P2. Cette définition particulière s'entend notamment pour les agrafes 1 d'angle, telles que visibles sur les figures 3 et 4.

Un premier type d'agrafe 1 dite « plane », est représenté à la figure 2. Une telle agrafe 1 est définie comme plane car sa partie active 4 s'étend dans un unique plan actif P2.

En particulier, la partie active 4 s'étend uniquement d'un côté du plan de connexion P1. Comme visible sur la figure 2, la partie active 4 s'étend uniquement en avant ou frontalement par rapport au plan de connexion P1.

On notera que cette partie active 4 peut présenter toute forme, à partir du moment où elle ne s'étend que d'un côté du plan de connexion P1.

Cette particularité permet à l'agrafe 1 d'être montée au pistolet de soudure 9, tout en permettant de voir l'emplacement de la ligne de réparation 14 à effectuer entre deux parties de la pièce à réparer, contrairement aux agrafes 1 de l'art antérieur, comme l'exemple représenté sur la figure B, dont le positionnement des branches de connexion 2 se retrouve en vis-à-vis et au-dessus de la ligne de réparation 14, dans l'alignement du pistolet de soudure 9, limitant la visibilité pour l'opérateur. Ainsi déportée, la partie active 4 est parfaitement visible pour l'opérateur, qui n'est plus gêné visuellement par le pistolet de soudure 9.

Par ailleurs, les branches 2 se retrouvent déportées, d'un côté de la ligne de réparation 14. Dès lors, au moment du sectionnement des points de jonction 5 puis du ponçage, ces opérations ne sont pas opérées au niveau de la ligne de réparation 14.

Selon un mode particulier de ce type d'agrafe plane 1, représenté sur la figure 1, la partie active 4 peut comprendre au moins deux extensions 15, 16. Ces extensions 15, 16 sont constituées par la forme conférée par pliage au fil constituant l'agrafe 1 au niveau de sa partie active 4. En particulier, chaque extension 15, 16 correspond à un serpentin relié, à une extrémité, aux points de jonction 5 des branches de connexion 2 et, entre eux à l'extrémité opposée.

Plus précisément, les deux extensions 15, 16 sont reliées entre elles au niveau d'un segment de jonction proximal 17, à savoir au plus près du plan de connexion P1.

De plus, chaque extension 15, 16 comprend un premier brin 18 et un second brin 19 reliés entre eux au niveau d'un segment de jonction distal 20, à savoir au plus loin du plan de connexion P1. Ainsi, cette configuration confère un profil en U à chaque extension 15, 16.

Cette forme assure le bon accrochage de la partie active 4 au sein de la pièce à réparer, du fait que les deux segments de jonction distaux 20 et le segment de jonction proximal 17 sont orientés sensiblement parallèlement par rapport à la ligne de réparation 14 et constituent des retenues orthogonales aux sens des forces tendant à écarter les parties de la pièce à réparer, alors que les brins 18, 19 qui sont dans l'alignement de ces forces, n'en limite que partiellement l'action.

A ce titre, selon un mode additionnel, au moins un brin 18, 19 d'une extension 15, 16 est ondulé sur au moins une partie de sa longueur.

Selon le mode de réalisation représenté sur la figure 2, c'est le premier brin 18 de la première extension 15 qui est ondulé sur toute sa longueur.

Cette ondulation d'un ou plusieurs brins 18, 19 permet d'améliorer l'accrochage d'une extension 15, 16 dans le sens des forces d'écartement, contrant leurs effets. Cette ondulation sous forme de zigzag limite le glissement, au regard d'une portion droite et lisse, tout en augmentant sa résistance à la courbure dans le premier plan actif P2.

Un mode de réalisation particulier réside dans le fait que la première extension 15 peut aussi présenter une longueur supérieure à celle de la seconde extension 16. Une telle longueur permet de déporter une partie de la partie active 4, améliorant l'accroche de cette première extension 15 dans le matériau à réparer.

De plus, cette longueur supérieure de la première extension 15 permet de ménager une portion ajustable 21 angulairement par rapport à la seconde extension 16. Une telle portion ajustable 21 peut être pliée, vers le haut ou vers le bas par rapport au premier plan actif P2 contenant le reste de la partie active 4 et en particulier la seconde extension 16. Ce pliage de la première extension 15 permet, selon les cas, de rentrer plus profondément dans l'épaisseur du matériau ou bien de s'adapter à une courbure de la pièce à réparer à ce niveau.

En outre, dans le cas d'un ou plusieurs brins 18, 19 ondulés, c'est préférentiellement le long de cette extension 15, 16 plus longue qu'est réalisée l'ondulation, de manière à augmenter l'effet de retenu.

Deux deuxièmes modes de réalisation, correspondant à deux autres types d'agrafes 1 dites « d'angles », sont représentés aux figures 3 et 4. La figure 3 représente une agrafe 1 destinée à coopérer avec un angle rentrant, à savoir intérieur, tandis que la figure 4 montre une agrafe 1 destinée à coopérer avec un angle saillant, à savoir extérieur.

Dans le cas d'une agrafe d'angle 1, au moins une extension 15, 16 peut être pliée de façon à s'étendre selon les deux plans actifs P2, P3.

Pour ce faire, une première portion 22 de la partie active 4 est pliée par rapport à une seconde portion 23, la première portion 22 s'étendant selon un second plan actif P3 orthogonal au premier plan actif P2 contenant la seconde portion 23.

Toutefois, chacune de ces deux agrafes d'angle 1 est obtenue à partir d'une agrafe de base dont la première portion 22 de la partie active 4 a été pliée vers le haut ou vers le bas. Initialement, la partie active 4 est donc contenue dans un seul plan, à savoir le premier plan actif P2. C'est dans cette configuration plane qu'il convient de mesurer la longueur de la partie active 4 supérieure à 13 mm, lorsque toute la partie active 4 est étendue à plat, dans l'unique plan virtuel, ou bien de mesurer l'intégralité de la longueur des portions 22, 23 de la partie active 4 s'étendant au sein de chacun des deux plans actifs P2, P3.

Selon une caractéristique additionnelle, le plan de connexion P1 peut être prévu incliné, donc non orthogonal, par rapport au premier plan actif P2. Une telle inclinaison est visible sur la figure 3. Combinée avec le déport de l'intégralité de la partie active 4 d'un seul côté du plan de connexion P1, cette inclinaison permet à l'opérateur, surtout dans le cas d'un angle rentrant, de mieux voir la ligne de réparation 14, en angle, contre laquelle il appose l'agrafe d'angle 1.

De plus, il est possible de modifier l'inclinaison du plan de connexion P1, à savoir l'inclinaison des branches de connexion 2, sans modifier l'inclinaison entre les portions 22, 23 de la partie active 4. De même, il est aussi possible de modifier l'inclinaison entre les deux plans actifs P2, P3 sans modifier l'inclinaison du plan de connexion P1 par rapport au premier plan actif P2.

Dans le cas d'une agrafe 1 destinée à coopérer avec un angle saillant, comme représenté à la figure 4, le plan de connexion P1 peut être orthogonal au premier plan actif P2, et ainsi parallèle au deuxième plan actif P3.

Toutefois, on constate que pour un angle rentrant, la première portion 22 s'étend du même côté que les branches de connexion 2, tandis que pour un angle saillant, la première portion 22 s'étend du côté opposé.

Par ailleurs, la partie active 4 d'une telle agrafe d'angle 1 peut être constituée de façon similaire à une agrafe plane, à savoir avec des extensions 15, 16 pourvues de brins 18, 19 reliés par les segments 17, 20. Selon les modes de réalisation représentés aux figures 3 et 4, les extensions 15, 16 peuvent être identiques, présentant les mêmes formes et les mêmes dimensions. Selon un autre mode de réalisation, non représenté, l'une d'entre elle peut présenter une longueur de ses brins 18, 19 plus grande que pour l'autre extension.

Un troisième type d'agrafe 1 dite « longue », est représenté aux figures 5 et 6, dans deux configurations successives différentes. Une telle agrafe 1 est définie comme longue car, avant sa mise en forme pour la réparation, sa partie active 4 s'étend selon la direction de jonction A-A', non seulement entre les projections des deux extrémités libres 3 selon la direction d'une portion de la branche de connexion 2 destinée à être reliée à une panne 10 du pistolet de soudure 9, mais également en dépassant au moins d'un côté l'une de ces projections, et de préférence en dépassant les deux projections comme illustré à la figure 5.

Pour ce faire, au moins une des branches 2 comprend un décroché 24 entre, d'une part, un premier segment 25 qui est relié à l'extrémité libre 3 et qui forme la portion de la branche de connexion 2 destinée à être reliée à une panne 10, et, d'autre part, un second segment 26 qui est relié au point de jonction 5. De plus, le décroché 24 est orienté extérieurement par rapport à l'espacement 11 entre les extrémités libres 3.

En d'autres termes, chaque décroché 24 constitue une portion coudée permettant de décaler latéralement, dans le plan de connexion P1, le premier segment 25 et le second segment 26. Ce dernier s'étend donc depuis l'intérieur vers l'extérieur de l'agrafe 1, dans le plan de connexion P1. En particulier, le décroché 24 s'étend orthogonalement ou sensiblement orthogonalement par rapport à l'un et/ou l'autre des segments 25, 26. Dès lors, la partie active 4 se retrouve allongée de la distance séparant chaque point de jonction 5 de la projection de l'extrémité libre 3 correspondante.

Tel que représenté à la figure 5, chaque branche de connexion 2 comprend un tel décroché 24, allongeant la partie active 4 de chaque côté.

Le décroché 24 et le second segment 26 peuvent être confondus et constitués d'une même portion du fil constituant la branche de connexion 2. Dès lors, cette portion de fil se retrouve inclinée et relie le bas du premier segment 25 au point de jonction 5 de la branche de connexion 2.

Ainsi, en maintenant le même écartement 11 des extrémités libres 3 des branches de connexion 2, on obtient une agrafe 1 de plus grande longueur, augmentant la longueur de son emprise lors de son insertion au sein du matériau à réparer.

A ce titre, la partie active 4 peut présenter toute forme, comme précédemment décrite, s'étendant selon un ou plusieurs plans actifs P2, P3. Selon le mode préférentiel de réalisation, la partie active 4 présente une forme longitudinale ondulée, présentant alors une surface d'emprise limitée, quasiment linéaire.

Une autre particularité des décrochés 24 réside dans le maintien d'un écartement constant des extrémités 3 des branches 2, au niveau de leur raccordement avec les pannes 10 du pistolet 9, lorsque la partie active 4 est déformée pour sa mise en forme pour la réparation. En somme, comme visible à la figure 6, la déformation appliquée à la partie active 4 entraine une rotation relative autour des axes constitués par les premiers segments 25, permettant à ces derniers de conserver leur espacement 11 initial. Il est donc possible d'arrondir l'agrafe 1, jusqu'à obtenir un cerclage, ce qui est particulièrement pratique lors de la réparation de pièces arrondies et percées, notamment dans le cas d'un oeillet.

Lors de la réparation d'une pièce, présentant une cassure ou une fissure s'étendant sensiblement selon une droite ou de façon rectiligne, séparant la pièce en deux parties, au niveau de cette ligne de rupture 14, plusieurs types d'agrafes 1 sont utilisées, en fonction de leur caractéristiques, en particulier en fonction de la forme et de la longueur de leur partie active 4.

Selon une méthode de réparation spécifique, au moins deux agrafes longues 1 sont incorporées à une extrémité de la ligne de rupture 14, notamment au niveau d'un bord de la pièce où les contraintes, notamment élastiques, sont les plus élevées. Ces deux agrafes 1 sont positionnées parallèlement l'une par rapport à l'autre, perpendiculairement ou sensiblement perpendiculairement à la ligne de rupture 14.

Au moment de leur fixation par thermosoudage dans le matériau de la pièce, chaque partie de la pièce à réparer est rapprochée et maintenue provisoirement, de manière à conférer à la pièce sa forme avant rupture. Ce n'est qu'après que sont placées les agrafes longues 1, permettant d'améliorer le maintien en forme des parties de la pièce.

Selon une étape facultative, afin d'améliorer la résistance à la traction dans le sens longitudinal des deux agrafes longues 1, à savoir selon le plan de connexion P1, des treillis peuvent être positionnés contre la face de la pièce, au niveau des branches de connexion 2 des agrafes longues 1. Ces treillis sont traversés par les paires de branches de connexion 2 des côtés de chaque agrafe longue 1. Les treillis sont aussi fixés, notamment par collage ou masticage, sur la face de la partie de la pièce à réparer. Un tel treillis peut être préférentiellement métallique, mais aussi plastique ou composite, notamment sous la forme de fibre ou de grille. Ainsi, ces treillis empêchant les agrafes longues 1 de s'extraire une fois emprisonnées dans le matériau, assurant une meilleure résistance au niveau du bord de la réparation subissant les plus de contraintes mécaniques.

Ensuite, le long de la ligne de rupture 14, vers l'intérieur de la pièce, sont incorporées successivement une agrafe plane 1 et une agrafe longue 1, et ainsi de suite jusqu'à l'extrémité de la ligne de rupture 14. En particulier, chaque agrafe plane 1 est positionnée de sorte que ces extensions 15, 16 s'étendent sensiblement perpendiculairement par rapport à la ligne de rupture 14. De même, la partie active 4 de chaque agrafe longue 1 s'étend elle aussi perpendiculairement à la ligne de rupture 14.

Ainsi, l'alternance des agrafes 1 longues et planes le long de la ligne de rupture 14 procure une succession de brins de longueurs différentes en répartissant de manière plus uniforme les forces de part et d'autre de la ligne de rupture 14 ainsi réparée.

De façon subsidiaire, comme évoqué précédemment, l'agrafe 1 est constituée d'un fil métallique. Un tel fil peut présenter une section variable, préférentiellement inférieure à 12 dixièmes de millimètre (12/10^{ème} mm), notamment comprise entre 6 à 9 dixièmes de millimètre, ou bien voire 10 à 12 dixièmes de millimètre.

En outre, de façon connexe, en fonction de la section du fil. constituant chaque type d'agrafe 1, ainsi que sa longueur, les caractéristiques de l'équipement de chauffage, en particulier le pistolet de soudure 9, peuvent être modifiées, notamment en ce qui concerne l'ampérage du courant électrique fourni.

En l'état, l'agrafe 1 selon l'invention améliore la résistance mécanique de la pièce réparée, tout en assurant la continuité d'origine. Sa partie active 4 plus étendue augmente la longueur d'accroche et répartit mieux les forces de rattachement, diminuant d'autant le risque de fissure, de pliure et ou d'arrachement lors d'une contrainte appliquée à la pièce ainsi réparée. Enfin, cette zone d'accrochage plus importante permet de mieux réparer les pièces, évitant le phénomène d'écartement des parties ressoudées de la pièce réparée dû à l'élasticité du matériau plastique thermoplastique ou composite les constituant, et limitant l'apparition ultérieure d'une fente au niveau de la ligne de réparation 14 et le décrochement des produits utilisés pour le remplissage destinés au camouflage de la ligne de jonction des deux parties ressoudées de la pièce réparée.

## Revendications

1. Agrafe (1), sous forme d'un fil métallique, comportant deux branches de connexion (2) pourvues chacune d'une extrémité libre (3) adaptée à être raccordée avec des pannes (10) d'un pistolet de soudure (9), l'agrafe (1) comportant une partie active (4) prévue pour être immergée au sein d'un matériau par thermosoudure et reliée à chaque branche de connexion (2) par un point de jonction (5) opposé à l'extrémité libre (3) correspondante, **caractérisée en ce que** la partie active (4) s'étend uniquement d'un côté d'un plan de connexion (P1) défini par les branches de connexion (2).

2. Agrafe (1) selon la revendication 1, **caractérisée en ce que** la partie active (4) comprend au moins une section droite ondulée sur au moins une partie de sa longueur.

3. Agrafe (1) selon l'une des revendications 1 et 2, **caractérisée en ce que** la partie active (4) comprend deux extensions (15, 16) reliées entre elles au niveau d'un segment de jonction proximal (17).

4. Agrafe (1) selon la revendication 3, **caractérisée** en ce chaque extension (15, 16) comprend deux brins (18, 19) reliés entre eux au niveau d'un segment de jonction distal (20).

5. Agrafe (1) selon la revendication 4, **caractérisé en ce que** le segment de jonction proximal (17) et les segments de jonction distaux (20) sont parallèles entre eux.

6. Agrafe (1) selon l'une des revendications 4 et 5, **caractérisée en ce qu'**au moins une partie de la longueur d'un brin (18, 19) d'une extension (15, 16) est ondulée.

7. Agrafe (1) selon l'une des revendications 3 à 6, **caractérisée en ce qu'**une extension (15) est plus longue que l'autre (16).

8. Agrafe (1) selon la revendication 7, **caractérisée en ce que** la partie de l'extension la plus longue (15) dépassant l'extension la plus courte (16) forme une portion ajustable (21) pliable.

9. Agrafe (1) selon l'une des revendications 1 à 8, **caractérisée en ce que** la partie active (4) s'étend selon un seul plan actif (2).

10. Agrafe (1) selon l'une des revendications 1 à 8, **caractérisée en ce que** la partie active (4) s'étend selon au moins deux plans actifs (P2, P3).

11. Agrafe (1) selon la revendication 10, **caractérisée en ce que** les deux plans actifs (P2, P3) forment un dièdre rentrant.

12. Agrafe (1) selon la revendication 10, **caractérisée en ce que** les deux plans actifs (P2, P3) forment un dièdre saillant.

## Patentansprüche

1. Als Metalldraht ausgebildete Klammer (1), umfassend zwei Verbindungsschenkeln (2), die jeweils mit einem freien Ende (3) versehen sind, das angepasst ist, um mit Spitzen (10) einer Schweißpistole (9) verbunden zu werden, wobei die Klammer (1) einen aktiven Teil (4) umfasst, der dazu bestimmt ist, durch Heißsiegeln in ein Material eingebettet zu werden und durch einen dem entsprechenden freien Ende (3) gegenüberliegenden Verbindungspunkt (5) mit jedem Verbindungsschenkel (2) verbunden ist, **dadurch gekennzeichnet, dass** sich der aktive Teil (4) nur auf einer Seite einer durch die Verbindungsschenkel (2) definierten Verbindungsebene (P1) erstreckt.

2. Klammer (1) nach Anspruch 1, **dadurch gekennzeichnet, dass** der aktive Teil (4) über zumindest einen Teil seiner Länge mindestens einen Wellenquerschnitt umfasst.

3. Klammer (1) nach einem der Ansprüche 1 und 2, **dadurch gekennzeichnet, dass** der aktive Teil (4) zwei Verlängerungen (15, 16) umfasst, die im Bereich eines proximalen Verbindungssegments (17) miteinander verbunden sind.

4. Klammer (1) nach Anspruch 3, **dadurch gekennzeichnet, dass** jede Verlängerung (15, 16) zwei im Bereich eines distalen Verbindungssegments (20) miteinander verbundene Stränge (18, 19) umfasst.

5. Klammer (1) nach Anspruch 4, **dadurch gekennzeichnet, dass** das proximale Verbindungssegment (17) und die distalen Verbindungssegmente (20) parallel zueinander sind.

6. Klammer (1) nach einem der Ansprüche 4 und 5, **dadurch gekennzeichnet, dass** mindestens ein Teil der Länge eines Stranges (18, 19) einer Verlängerung (15, 16) gewellt ist.

7. Klammer (1) nach einem der Ansprüche 3 bis 6, **dadurch gekennzeichnet, dass** eine Verlängerung (15) länger ist als die andere (16).

8. Klammer (1) nach Anspruch 7, **dadurch gekennzeichnet, dass** der Teil der längeren Verlängerung (15), der sich über die kürzere (16) Verlängerung hinaus erstreckt, einen faltbaren einstellbaren Teil (21) bildet.

9. Klammer (1) nach einem der Ansprüche 1 bis 8, **dadurch gekennzeichnet, dass** der aktive Teil (4) sich in einer einzigen aktiven Ebene (2) erstreckt.

10. Klammer (1) nach einem der Ansprüche 1 bis 8, **dadurch gekennzeichnet, dass** der aktive Teil (4) sich in mindestens zwei aktiven Ebenen (P2, P3) erstreckt.

11. Klammer (1) nach Anspruch 10, **dadurch gekennzeichnet, dass** die beiden aktiven Ebenen (P2, P3) ein einspringendes Dieder bilden.

12. Klammer (1) nach Anspruch 10, **dadurch gekennzeichnet, dass** die zwei aktiven Ebenen (P2, P3) ein vorstehendes Dieder bilden.

## Claims

1. Clip (1), in the form of a metal wire including two connecting legs (2), each provided with a free end (3) adapted to be connected to tips (10) of a welding gun (9), the clip (1) including an active portion (4) intended to be immersed into a material by heat-sealing and connected to each connecting leg (2) by a joining point (5) opposite the corresponding free end (3), wherein the active portion (4) extends only on one side of a connection plane (P1) defined by the connecting legs (2).

2. Clip (1) according to claim 1, wherein the active portion (4) comprises at least one corrugated cross-section over at least part of its length.

3. Clip (1) according to one of claims 1 and 2, wherein the active portion (4) comprises two extensions (15, 16) connected to each other at the level of a proximal joining segment (17).

4. Clip (1) according to claim 3, wherein each extension (15, 16) comprises two strands (18, 19) connected to each other at the level of a distal joining segment (20).

5. Clip (1) according to claim 4, wherein the proximal joining segment (17) and the distal joining segments (20) are parallel to each other.

6. Clip (1) according to one of claims 4 and 5, wherein at least a portion of the length of a strand (18, 19) of an extension (15, 16) is undulated.

7. Clip (1) according to one of claims 3 to 6, wherein one extension (15) is longer than the other one (16).

8. Clip (1) according to claim 7, wherein the portion of the longer extension (15) extending beyond the shorter extension (16) forms a foldable adjustable portion (21).

9. Clip (1) according to one of claims 1 to 8, wherein the active portion (4) extends in a single active plane (2).

10. Clip (1) according to one of claims 1 to 8, wherein the active portion (4) extends in at least two active planes (P2, P3).

11. Clip (1) according to claim 10, wherein the two active planes (P2, P3) form a re-entrant dihedron.

12. Clip (1) according to claim 10, wherein the two active planes (P2, P3) form a protruding dihedron.
